# EUROPEAN PATENT APPLICATION

(11) **EP 1 770 604 A1**
(43) Date of publication of application: **04.04.2007**
(21) Application number: 05767365.9
(22) Date of filing: 21.07.2005
(51) Int. Cl.: G06K 19/07, G06K 7/12, G06K 19/06, G09G 5/00

(54) **MULTICOLORED TWO-DIMENSIONAL BARCODE, IMAGE DISPLAY APPARATUS THEREOF, INFORMATION TERMINAL APPARATUS, DISPLAY METHOD, DECODING METHOD, INFORMATION COMMUNICATION SYSTEM, AND INFORMATION COMMUNICATION METHOD**

(30) Priority: 22.07.2004 JP 2004214033
(71) Applicant: MATSUSHITA ELECTRIC INDUSTRIAL CO., LTD., Osaka 571-8501 (JP)
(72) Inventor: NAKAI, Yuichiro, c/o Matsushita El. Ind. Co., Ltd., Osaka 540-6319 (JP)
(74) Representative: Grünecker, Kinkeldey, Stockmair & Schwanhäusser Anwaltssozietät
(86) International application number: PCT/JP2005/013777
(87) International publication number: WO 2006/009300

(57) **Abstract**

A means of referring to a reference signal embedded in multi-color two-dimensional bar code (302) received from the Internet and optimizing the adjustment of colors of an output picture image. Furthermore, when the recognition fails, the tint is readjusted by a feedback means and the recognition rate in portable terminal (303) is improved. This configuration improves the recognition rate of a picture image at the portable terminal of multi-color two-dimensional bar code (302) received from the Internet, and makes it possible to transmit a large amount of data information from television to the portable terminal for a short time.

## Description

### TECHNICAL FIELD

The present invention relates to a multi-color two-dimensional bar code, and an image display device for displaying the multi-color two-dimensional bar code, an information terminal device for decoding information from the multi-color two-dimensional bar code, a method for displaying the multi-color two-dimensional bar code, a method for decoding the multi-color two-dimensional bar code, an information communication system using the multi-color two-dimensional bar code, and an information communication method. In particular, when a television screen is photographed by a portable information terminal, the present invention improves an information recognition rate on the portable information terminal by optimizing the tint of the screen.

### BACKGROUND ART

Among methods for taking out data information from picture images photographed by a portable information terminal, a means capable of transmitting a large amount of information includes a method of photographing two-dimensional bar code information displayed on a television screen, reading (decoding) the picture image data on the portable information terminal and extracting them as data. The portable information terminal stores the information in the portable information terminal itself and uses it.

Since this two-dimensional bar code is capable of recording a large amount of information by disposing points having a predetermined size in matrix, it is necessary to read out a recording position of each point exactly. Therefore, also in the portable information terminal, it is required that the two-dimensional bar code is photographed exactly when it is photographed by a camera.

Furthermore, in a binary two-dimensional bar code using only two colors of white and black, only "0" and "1" of dot can be expressed by one dot. Therefore, in order to further increase the amount of information, besides a conventional method composed of two kinds of dots of white and black, a "multi-valued type two-dimensional bar code" method composed of colors such as red, blue and green, which are not limited to white or black, has been investigated.

However, with a display driving device of a conventional Internet television, even when a multi-valued type two-dimensional bar code is photographed by a portable information terminal, depending upon expression of the tints of a display driving device, when information is obtained on the portable information terminal, data cannot be read correctly.

### SUMMARY OF THE INVENTION

The present invention is intended to address the above-mentioned problem, and it is an object of the present invention to allow a two-dimensional bar code displayed on an Internet television to be excellently readable as data when it is photographed by a portable information terminal.

In order to dissolve this problem, in the present invention, a part of dots of a multi-color two-dimensional bar code include reference dots showing the tint and/or compare dots showing the number of tints used for the bar code.

According to the present invention, image quality of the two-dimensional bar code displayed on an Internet television is clearer than a conventional image quality, a television screen can be photographed by a portable information terminal more clearly, and the rate of recognizing information from the portable information terminal is improved.

### BRIEF DESCRIPTION OF THE DRAWINGS

Fig. 1A illustrates a kind of bar code in accordance with a first exemplary embodiment of the present invention.
Fig. 1B illustrates a kind of bar code in accordance with a first exemplary embodiment of the present invention.
Fig. 1C illustrates a kind of bar code in accordance with a first exemplary embodiment of the present invention.
Fig. 2 is a conceptual block diagram showing a display driving device in accordance with the first exemplary embodiment of the present invention.
Fig. 3 is a conceptual diagram showing a communication between a display driving device and an information portable terminal in accordance with first to third exemplary embodiments of the present invention.
Fig. 4 is a view to illustrate a bar code in accordance with second and third exemplary embodiments of the present invention.
Fig. 5 is a conceptual block diagram showing a display driving device in accordance with the second exemplary embodiment of the present invention.
Fig. 6 is a flowchart showing action and operation of the display driving device and the portable information terminal in accordance with the second exemplary embodiment of the present invention.
Fig. 7 is a conceptual block diagram showing a display driving device in accordance with the third exemplary embodiment of the present invention.
Fig. 8 is a flowchart showing action and operation of the display driving device and the portable information terminal in accordance with the third exemplary embodiment of the present invention.
Fig. 9 is a block diagram showing a configuration of a portable information terminal in accordance with the first exemplary embodiment of the present invention.
Fig. 10 is a block diagram showing a configuration of a portable information terminal in accordance with the second and third exemplary embodiments of the present invention.

### DETAILED DESCRIPTION OF THE PREFERRED EMBODIMENTS

Hereinafter, specific Examples are described, but various modifications can be carried out within the scope of the present invention.

### (FIRST EXEMPLARY EMBODIMENT)

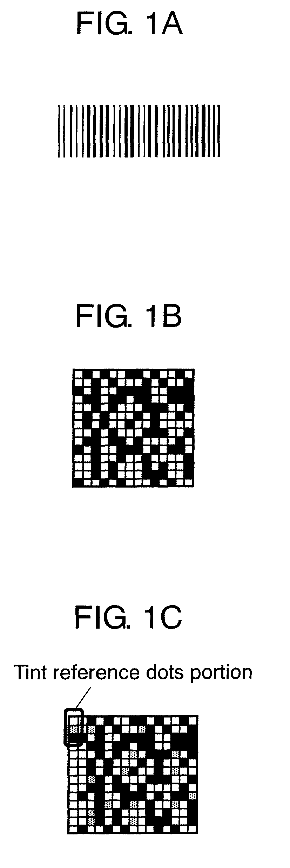

Hereinafter, a first exemplary embodiment of the present invention is described with reference to Figs. 1A to 1C, Fig. 2 and Fig. 3.

In the following description, well-known functions that are necessary to Examples of the present invention and that are already known in the field of the art of the present invention are not described herein unless they are necessary portions for description of the present invention.

The kinds of bar codes are described with reference to Figs. 1A to 1C. Figs. 1A to 1C show examples of bar codes.

In a one-dimensional bar code, as shown in Fig. 1A, bars and space are arranged one-dimensionally.

As shown in Fig. 1B, a two-dimensional bar code is a matrix type two-dimensional bar code.

Furthermore, Fig. 1C shows a two-dimensional bar code using many colors that are not limited to two colors of white and black, which is referred to as "multi-color two-dimensional bar code" hereinafter.

The multi-color two-dimensional bar code in accordance with the present invention includes tint reference dots in a multi-color two-dimensional bar code.

In an example shown in Fig. 1C, a multi-color two-dimensional bar code is composed of three colors such as red, green and blue and includes "tint reference dots" for reference when a display is driven.

In the first exemplary embodiment, since one dot includes three values (red, green and blue), the tint reference dots are composed of three dots and each dot expresses each of the three values (red, green and blue), respectively.

In the present invention, the position of the tint reference dots is not particularly limited to this position, but it may be located anywhere as long as it is located in the multi-valued two-dimensional bar code.

In the present invention, colors used in the multi-color two-dimensional bar code are not limited to the above-described three colors but any numbers of colors may be used. In this case, the tint reference dots having the same number as that of the colors used in the multi-color two-dimensional bar code are included.

In a method of arranging dots of the respective colors of the multi-color reference dots in the present invention, red dot, green dot and blue dot are arranged in longitudinal line in this order. However, the order of arranging dots is not particularly limited and they may be arranged in any arrangement.

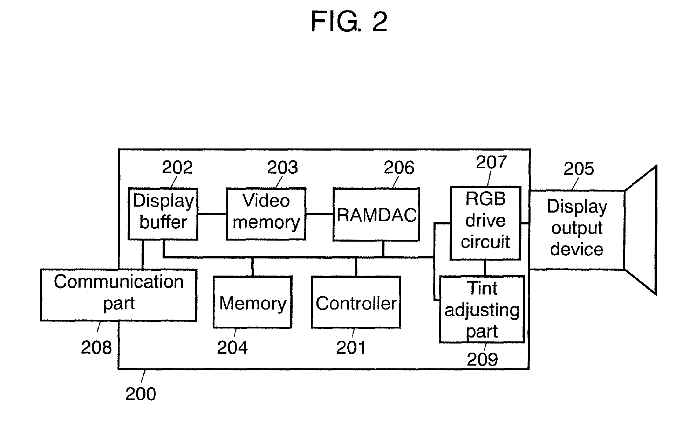

Fig. 2 is a conceptual block diagram showing a display driving device (which corresponds to "image display device" in the present invention) including a tint adjusting means in accordance with the first exemplary embodiment of the present invention.

Driving device 200 of the present invention includes controller 201 for controlling the operation of each constituent element of driving device 200 by an already coded program, communication part 208 for establishing the communication between driving device 200 and the Internet, and display buffer 202 for temporarily storing picture image data of information obtained by the control of driving device 200 via communication part 208 such as a web page.

Herein, display buffer 202 stores a multi-color two-dimensional bar code obtained via the Internet.

Furthermore, driving device 200 includes video memory 203 for storing picture image data and further includes RAMDAC (Random Access Memory Digital to Analog Converter) 206 for converting digital data read out from memory 204 into analog signals and outputting them onto display output device 205 of the Internet television.

In tint adjusting part 209, by referring to the tint reference dots of the multi-color two-dimensional bar code, the tint of the picture image part including at least the multi-color two-dimensional bar code is adjusted so that color signals R (red), G (green) and B (blue) in the input tint reference dots become output balance values that were prepared in advance. Then, the adjusted color signals R, G and B are output to RGB drive circuit 207.

In RGB drive circuit 207, color signals R (red), G (green) and B (blue) are amplified and output to display output device 205.

Note here that tint adjusting part 209 described herein corresponds to a "tint control part" in the present invention.

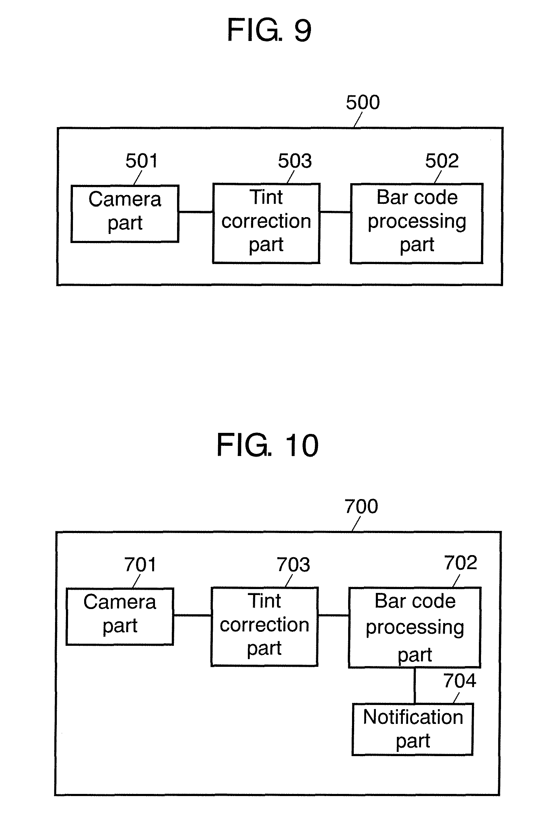

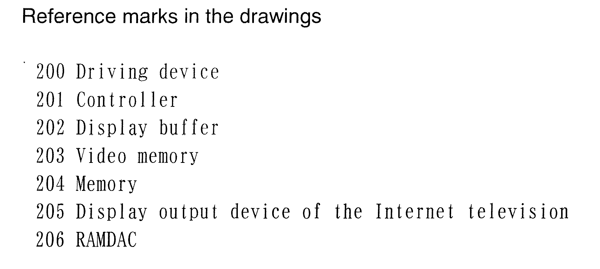

Fig. 9 is a block diagram showing a configuration of portable information terminal 500 for photographing a multi-color two-dimensional bar code displayed on display output device 205 of driving device 200 and decoding information therefrom.

In Fig. 9, camera part 501 photographs an image. Bar code processing part 502 recognizes a bar code from the image photographed by camera part 501 and decodes information from this bar code. Then, in tint correcting part 503, by referring to the tint shown by the reference dots of the multi-color two-dimensional bar code contained in the image photographed by camera part 501, the tint of the photographed image is corrected.

For example, in the first exemplary embodiment, the reference dots include three values of red, blue and green. However, depending upon the performance of camera part 501 of portable information terminal 500, these cannot be often recognized as red, blue and green. In this case, if the reference dots are already determined to be expressed by the three values of red, blue and green in portable information terminal 500, red, blue and green colors which were stored in advance can be compared with red, blue and green colors which are recognized from the reference dots so as to correct the tint of the picture image containing a multi-color two-dimensional bar code.

Thus, the recognition rate of the multi-color two-dimensional bar code by portable information terminal 500 can be improved.

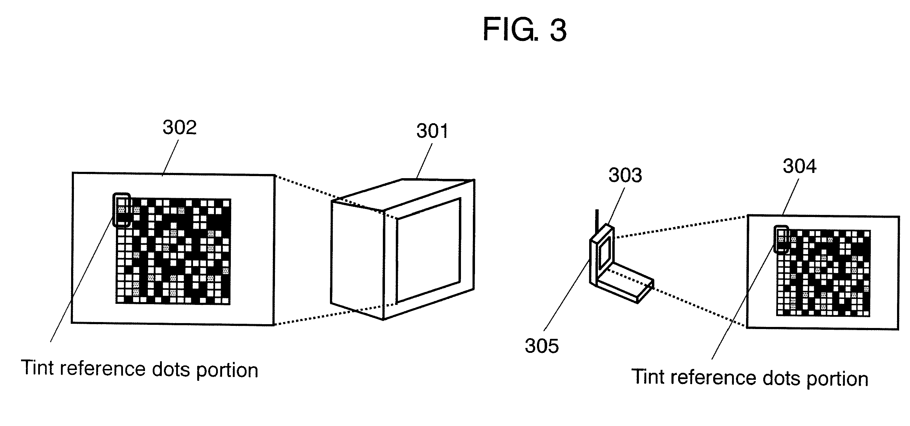

Fig. 3 is a view to illustrate a system for transmitting/receiving data to/from the portable information terminal for photographing picture image data from a television screen and obtaining information.

Fig. 3 shows display device 301 of an Internet television and enlarged view 302 of a multi-color two-dimensional bar code displayed on display device 301, as well as portable information terminal 303 and enlarged view 304 of a multi-color two-dimensional bar code displayed on a screen of portable information terminal 303.

Firstly, on a screen of display device 301 of the Internet television, a picture image of a multi-color two-dimensional bar code is output to be displayed.

Subsequently, a picture image photographed by attachment camera part 305 of portable information terminal 303 disposed in the direction of the picture image is shown in screen 304 of portable information terminal 303 although depending upon the performance of camera 305 of portable information terminal 303.

At this time, on display device 301, a picture image adjusted by tint adjusting part 209 is output. Since picture image 302 is output on a display in three colors, picture image data can be obtained also in three colors on a screen of the portable information terminal.

Subsequently, in portable information terminal 303, in an arithmetic processing circuit (corresponding to bar code processing part 502 shown in Fig. 9) inside portable information terminal 303, color information of the multi-color two-dimensional bar code are converted into data information having three values per dot of information, so that data can be obtained correctly.

Since the tint of the recognized multi-color two-dimensional bar code is corrected by a tint correction circuit (tint correcting part 503 shown in Fig. 9) inside portable information terminal 303, even if the tint reproducibility of attachment camera part 305 (camera part 501 in Fig. 9) in portable information terminal 303 is low, it is possible to obtain data correctly.

### (SECOND EXEMPLARY EMBODIMENT)

Hereinafter, a second exemplary embodiment of the present invention is described with reference to Figs. 3, 4, 5 and 6.

Fig. 3 is a view to illustrate a system for transmitting/receiving data to/from the portable information terminal for photographing picture image data from a television screen and obtaining information in accordance with the second exemplary embodiment of the present invention.

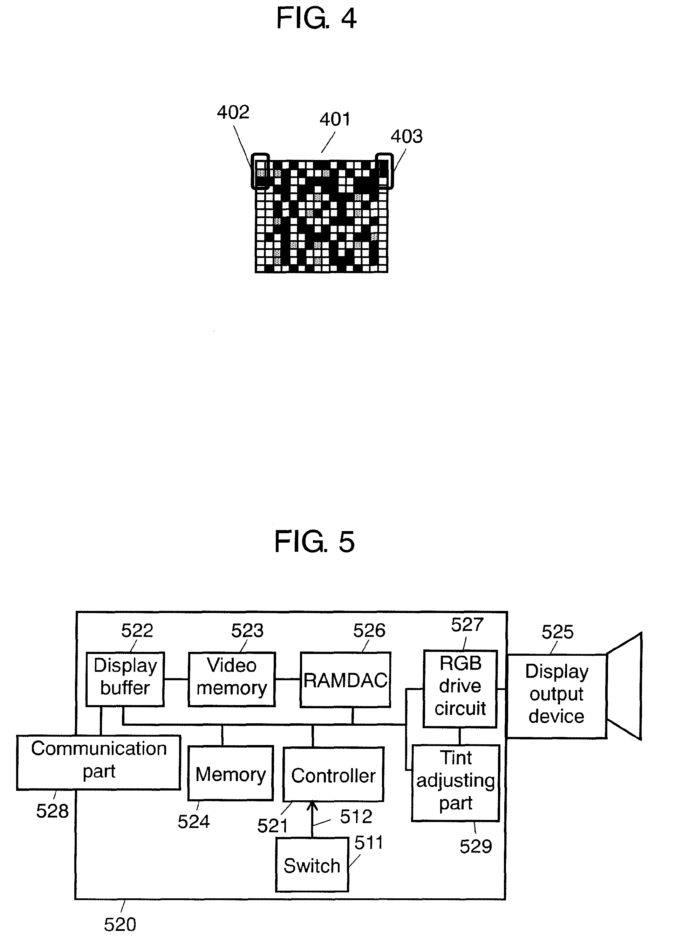

Fig. 4 shows a multi-color two-dimensional bar code in accordance with second exemplary embodiment of the present invention. Multi-color two-dimensional bar code 401 has compare dots 403 in addition to tint reference dots 402.

Tint reference dot 402 is the same as that described in the first exemplary embodiment.

Compare dots 403 are dots expressed by two values of white and black and the number of colors used in multi-color two-dimensional bar code picture image 401 is expressed by two values. For example, when six colors are used, it is described as "0110."

Fig. 5 is a conceptual block diagram showing display driving device 520 of the Internet television in accordance with the second exemplary embodiment of the present invention. This block diagram includes switch 511 that can be operated from the outside and signal 512 transmitted when switch 511 is pushed in addition to the block diagram described in the first exemplary embodiment of the present invention. Other elements in Fig. 5 are substantially the same as those in Fig. 2 in the first exemplary embodiment and so the description therefor is omitted herein.

Fig. 10 is a block diagram showing a configuration of portable information terminal 700 for photographing a multi-color two-dimensional bar code displayed on display output device 525 of driving device 520 to decode information therefrom.

In Fig. 10, notification part 704 notifies a failure in recognition of a bar code by bar code processing part 702. For example, when the number of tints shown by the compare dots does not match to the number of tints appearing in the reference dots of the photographed multi-color two-dimensional bar code, notification part 704 notifies the failure in recognition of a bar code to the outside.

In the second exemplary embodiment, the number of tints shown by the compare dots and the number of tints appearing in the reference dots are compared with each other, however, the number of tints shown in the compare dots can be compared with the number of tints used in the entire multi-color two-dimensional bar code.

Examples of notifying means may include displaying notification additionally on a display screen of portable information terminal 700, issuing an alert beep, flashing LED, and the like. However, the means is not particularly limited thereto.

Other elements in Fig. 10 are substantially the same as those shown in Fig. 9, and so the description therefor is omitted herein.

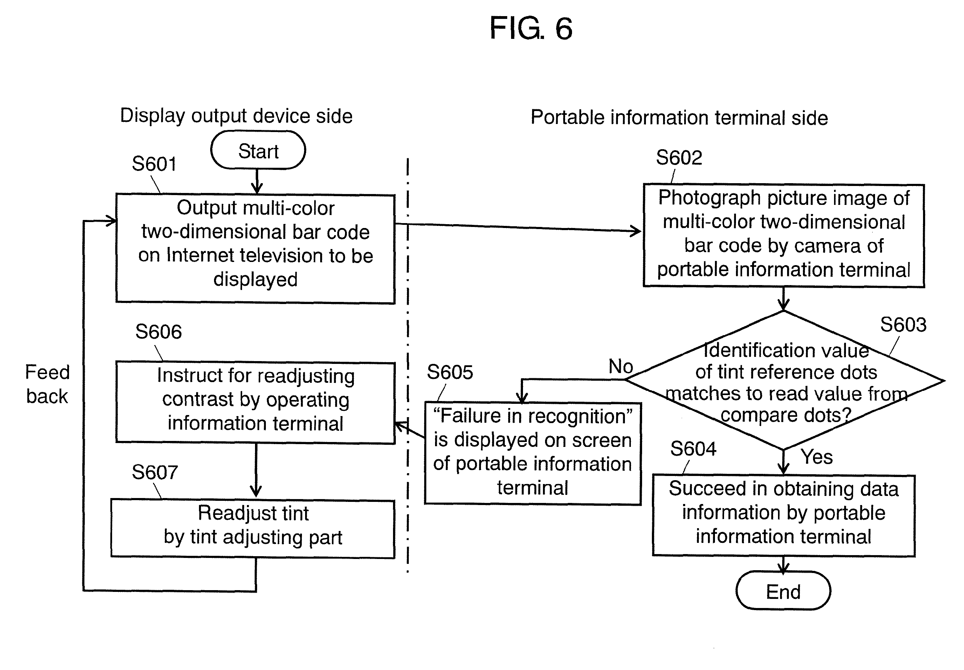

Driving device 520 and portable information terminal 700 in accordance with the second exemplary embodiment acts and operates in accordance with a flowchart shown in Fig. 6.

The action is described sequentially with respect to Fig. 6.

Firstly, a picture image of the multi-color two-dimensional bar code is output to be displayed on a screen of display device 301 (corresponding to driving device 502 in Fig. 5) of the Internet television (S601).

Subsequently, the picture image is photographed by attachment camera part 305 (corresponding to camera part 701 in Fig. 10) of portable information terminal 303 (corresponding to portable information terminal 700 in Fig. 10) by disposing it in the direction of the picture image (S602). Herein, a case where the photographed picture image can be recognized with only fewer colors than the number of colors of picture image 302, although depending upon the performance of attachment camera part 305 of portable information terminal 303, is considered.

An example of such a case includes a case where on display device 301, a picture image adjusted by tint adjusting part 529 is output and picture image 302 is output on a display in three colors, but it is displayed in only two colors on portable information terminal 303. At the side of display device 301, information of the multi-color two-dimensional bar code has three values per dot of information. While, portable information terminal 303 can receive only two values per dot of information.

Then, when portable information terminal 303 examines the compare dots, they have two gray scale, white and black. Therefore, for example, data "011" can be obtained securely and the number of colors of 3 can be obtained from the compare dots.

Portable information terminal 303 determines whether the number of colors: 3 obtained from the compare dots matches to the number of colors: 2 obtained from the tint reference dots (5603).

When they match to each other, the step determines that data can be obtained correctly, that is, "succeed in obtaining" and the step goes to the following step (S604). When they do not match to each other, since data showing wrong number of colors are insignificant, "determination of failure in recognition" is notified to a user of portable information terminal 303 by outputting notification on the screen of portable information terminal 303 or issuing some sound, and the like (S605).

When a user receives the notification of "determination of failure in recognition," the user sends instruction for changing the tint to tint adjusting part 529 via controller 521 by operating the main body of display device 301 or by operating a remote control (S606).

When tint adjusting part 529 receives the instruction for changing the tint, it changes output balance values of color signals R (red), G (green) and B (blue) so that the balance value becomes different from the previous one, for example, so that contrast is higher (S607). Then, a picture image, in which the change was reflected, is output to display output device 525 and thus carries out feedback with respect to the failure in recognition.

Note here that in the second exemplary embodiment of the present invention, a case where the compare dots are composed of two values of white and black and have the number of dots of three was explained. However, the compare dots are not limited thereto and any multi-valued expression by any colors and any number of dots may be employed as long as the number of colors used in the multi-color two-dimensional bar code can be expressed.

With such a configuration, even when data of the multi-color two-dimensional bar code from the display device failed in being recognized on the portable information terminal, by changing the tint of the output picture image of the television screen, possibility of success in recognition can be increased.

### (THIRD EXEMPLARY EMBODIMENT)

Hereinafter, a third exemplary embodiment of the present invention is described with reference to Figs. 3, 4, 7 and 8.

Fig. 3 shows a system for transmitting/receiving data to/from portable information terminal obtaining information by photographing picture image data from the television screen in accordance with the third exemplary embodiment of the present invention.

Fig. 4 shows a multi-color two-dimensional bar code in accordance with the third exemplary embodiment of the present invention. The description of the tint reference dots is the same as that in the first exemplary embodiment and the description of the compare dots is the same as that in the second exemplary embodiment.

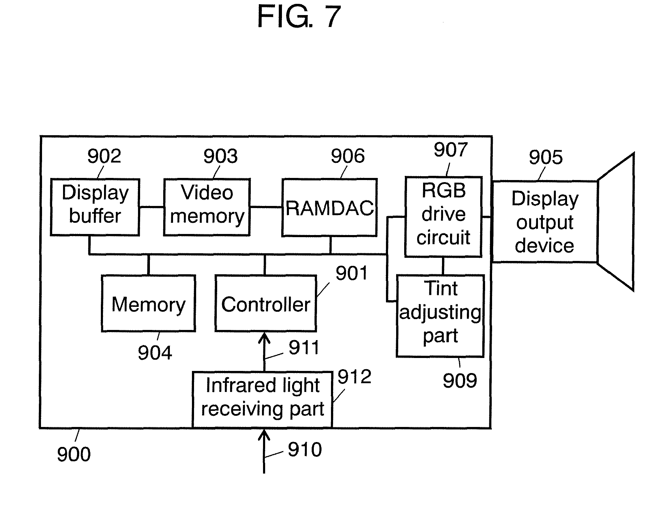

Fig. 7 is a conceptual block diagram showing display driving device 900 of the Internet television. Display driving device 900 includes photo receiving part 912 capable of receiving infrared ray signal 910 and infrared light from the outside in accordance with the third exemplary embodiment of the present invention in addition to the block diagram illustrated in the first exemplary embodiment of the present invention. Other elements in Fig. 7 are substantially the same as those in Fig. 2 of the first exemplary embodiment, and so the description therefor is omitted herein.

Furthermore, in the third exemplary embodiment, the configuration of portable information terminal 700 is the same as that described in Fig. 10 of the second exemplary embodiment. When the number of tints shown by the compare dots does not match to the number of tints appearing in the reference dots, notification part 704 notifies a failure in recognition of a bar code.

In the third exemplary embodiment, the number of tints shown by the compare dots and the number of tint appearing in the reference dots are compared with each other, however, the number of tints shown in the compare dots can be compared with the number of tints used in the entire multi-color two-dimensional bar code.

In the third exemplary embodiment, notification part 704 notifies the failure in recognition of a bar code to the outside (infrared light receiving part 912 of display driving device 900) by way of an infrared communication.

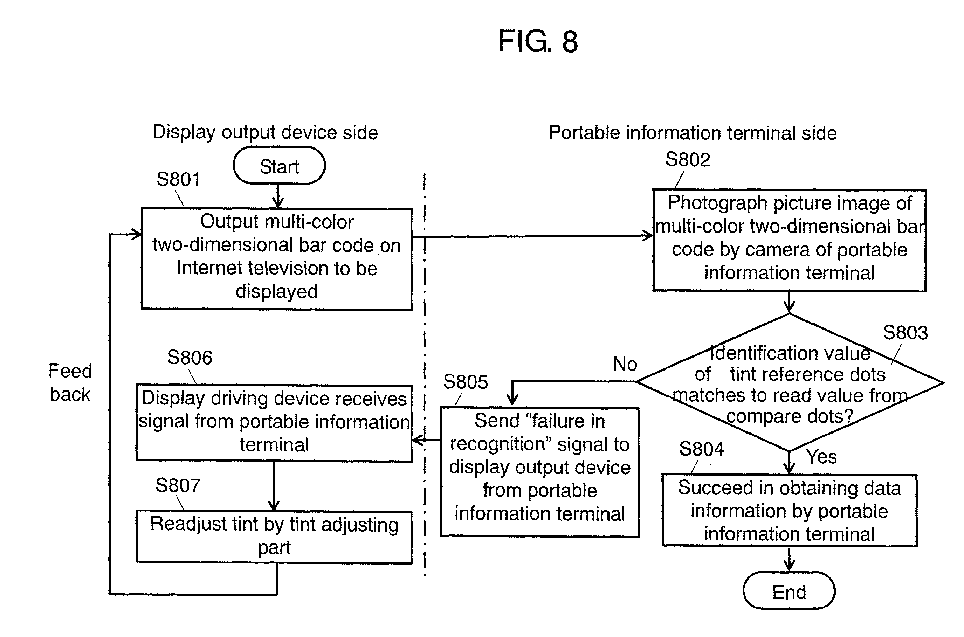

Furthermore, a system for transmitting/receiving data to/from portable information terminal 700 obtaining information by photographing picture image data of the display output device 905 in accordance with the third exemplary embodiment of the present invention acts in accordance with the flowchart shown in Fig. 8.

The action is described sequentially with reference to Fig. 8.

Firstly, a picture image of the multi-color two-dimensional bar code is output to be displayed on a screen of display device 301 (corresponding to driving device 900 in Fig. 7) of the Internet television (S801). Subsequently, the picture image is photographed by attachment camera part 305 (corresponding to camera part 701 in Fig. 10) of portable information terminal 303 (corresponding to portable information terminal 700 in Fig. 10) by disposing it in the direction of the picture image (S802). Herein, a case where the photographed picture image can be recognized with only fewer colors than the number of colors of picture image 302, although depending upon the performance of attachment camera part 305 of portable information terminal 303, is considered.

An example of such a case includes a case where on display device 301, a picture image adjusted by tint adjusting part 529 is output and picture image 302 is output on a display in three colors, but it is displayed in only two colors on portable information terminal 303. At the side of display device 301, information of the multi-color two-dimensional bar code has three values per dot of information. While, portable information terminal 303 can receive only two values per dot of information.

Then, when portable information terminal 303 examines the compare dots, they have two gray scales, white and black. Therefore, for example, data "011" can be obtained securely and the number of colors of 3 can be obtained from the compare dots.

Portable information terminal 303 determines whether the number of colors: 3 obtained from the compare dots match to the number of colors: 2 obtained from the tint reference dots (5803).

When they match to each other, the step determines that data can be obtained correctly, that is, "succeed in obtaining" and the step goes to the following step (S804). When they do not match to each other, since data showing wrong number of colors are insignificant, "determination of failure in recognition" signal 910 is sent to infrared light receiving part 912 of display device 301 (corresponding to display driving device 900 in Fig. 7) from an infrared communication part (corresponding to notification part 704 in Fig. 10) of portable information terminal 303 (S805).

When display device 301 receives "determination of failure in recognition" signal 910 (S806), it sends instruction for changing the tint 911 to tint adjusting part 909 via controller 901.

When tint adjusting part 909 receives the instruction for changing the tint 911, it changes output balance values of color signals R (red), G (green) and B (blue) so that the balance value becomes different from the previous one, for example, so that contrast is higher (S807). Then, an image is output to display output device 905 and thus carries out feedback with respect to the failure in recognition.

Note here that the third exemplary embodiment of the present invention described a case where the number of dots of the compare dots is three. However, the number of dots is not limited thereto and any number of dots may be employed as long as it can express the number of colors used in the multi-color two-dimensional bar code.

With such a configuration, even when data of a multi-color two-dimensional bar code from the display device cannot be recognized on the portable information terminal successfully, instruction for changing the tint of output picture image of a television screen again for a short time. As a result, the probability of success in recognition can be increased.

### INDUSTRIAL APPLICABILITY

A multi-color two-dimensional bar code, an image display device for displaying the multi-color two-dimensional bar code, an information terminal device for decoding information from the multi-color two-dimensional bar code, a method for displaying the multi-color two-dimensional bar code, a method for decoding the multi-color two-dimensional bar code, an information communication system using the multi-color two-dimensional bar code and a information communication method of the present invention have an effect capable of making the quality of image of a two-dimensional bar code to be displayed on the Internet television clearer than a conventional image quality, capable of photographing a television screen more clearly from a portable information terminal, and improving the information recognition rate by the portable information terminal. Furthermore, the present invention is useful in the field of a display of the Internet television, in particular, in the field in which the television screen is photographed by a portable information terminal and information is recognized on the portable information terminal.

## Claims

1. A multi-color two-dimensional bar code comprising reference dots showing a tint in a part of dots.

2. An image display device, comprising:
a display output device for displaying an image; and
a tint control part for controlling a tint of the image that is output on the display output device;
wherein the tint control part controls the tint of the image by referring to reference dots of a multi-color two-dimensional bar code that includes the reference dots showing a tint in a part of dots.

3. An information terminal device, comprising:
a camera part for photographing an image;
a bar code processing part for recognizing a bar code from the image photographed by the camera part to decode information from the bar code; and
further comprising:
a tint correcting part for correcting a tint of the image photographed by the camera part;
wherein the tint correcting part corrects the tint of the photographed image by referring to a tint shown by reference dots of a multi-color two-dimensional bar code that includes the reference dots showing a tint in a part of dots.

4. A multi-color two-dimensional bar code, comprising compare dots showing a number of tints used for a bar code in a part of dots.

5. The multi-color two-dimensional bar code according to claim 4, wherein the compare dots are a plurality of dots composed of two colors of white and black.

6. An information terminal device, comprising:
a camera part for photographing an images;
a bar code processing part for recognizing a bar code from the image photographed by the camera part to decode information from the bar code; and
further comprising:
a notification part for notifying a failure in recognition of a bar code by the bar code processing part;
wherein the notification part notifies the failure in recognition of a bar code when a number of tints shown by compare dots of a multi-color two-dimensional bar code including the compare dots showing a number of tints used for the bar code in a part of dots does not match to a number of tints appearing in the photographed multi-color two-dimensional bar code.

7. An image display device for displaying an image, comprising:
a receiving part for receiving a signal notifying that a number of tints shown by compare dots does not match to a number of tints appearing in a multi-color two-dimensional bar code from an information terminal device for displaying the multi-color two-dimensional bar code including the compare dots showing the number of tints used for a bar code in a part of dots and further recognizing the multi-color two-dimensional bar code to decode information; and
a tint control part for controlling the tint of an image that is output on the image display device in response to the reception of the signals.

8. A method for displaying a multi-color two-dimensional bar code including reference dots showing a tint in a part of dots on an image display device, the method comprising:
referring to the reference dots of the multi-color two-dimensional bar code; and
controlling a tint of an image displayed on the image display device.

9. A method of decoding information of a multi-color two-dimensional bar code of photographing the multi-color two-dimensional bar code including reference dots showing a tint in a part of dots to decode information from the multi-color two-dimensional bar code, the method comprising:
referring to the reference dots of the multi-color two-dimensional bar code; and
correcting a tint of the photographed picture image.

10. A method of decoding information of a multi-color two-dimensional bar code of photographing the multi-color two-dimensional bar code including compare dots showing a number of colors in a part of dots to decode information from the multi-color two-dimensional bar code, the method comprising:
referring to the compare dots of the multi-color two-dimensional bar code, and
notifying a failure in recognition of a bar code when a number of tints shown by the compare dots does not match to a number of tints appearing in the photographed multi-color two-dimensional bar code.

11. A method of displaying a multi-color two-dimensional bar code for displaying the multi-color two-dimensional bar code including compare dots showing a number of colors in a part of dots on an image display device, the method comprising;
receiving a signal notifying that a number of tints shown by the compare dots does not match to a number of tints appearing in the multi-color two-dimensional bar code from the information terminal device recognizing the multi-color two-dimensional bar code displayed on the image display device; and
controlling the tint of the image that is displayed on the image display device.

12. An information communication system, comprising an image display device and an information terminal device,
wherein the image display device comprises:
a display output device for displaying a multi-color two-dimensional bar code including reference dots showing a tint and compare dots showing a number of colors in a part of dots;
a receiving part for receiving a signal notifying a failure in recognition of a bar code from the information terminal device; and
a tint control part for controlling a tint of an image based on the reference dots and the signal notifying a failure in recognition of the bar code; and
wherein the information terminal device comprising:
a camera part for photographing an image that is displayed on the display output device;
a bar code processing part for recognizing the multi-color two-dimensional bar code from the image photographed by the camera part to decode information from the multi-color two-dimensional bar code; and
a notification part for notifying the failure in recognition of a bar code when a number of tints shown by the compare dots does not match to a number of tints appearing in the reference dots.

13. An information communication method for decoding information from a multi-color two-dimensional bar code displayed on an image display device, the method comprising:
displaying the multi-color two-dimensional bar code including reference dots showing a tint and compare dots showing a number of colors in a part of dots;
controlling the tint of the displayed image by referring to the reference dots;
recognizing the multi-color two-dimensional bar code from the displayed image to decode information;
notifying a failure in recognition of a bar code when a number of tints shown by the compare dots does not match to a number of tints appearing in the reference dots; and
controlling the tint of the displayed image when the signal notifying the failure in recognition of a bar code is received.
